(19) Europäisches Patentamt
European Patent Office
Office européen des brevets

(11) Publication number: **0 351 195 B1**

(12) # EUROPEAN PATENT SPECIFICATION

(45) Date of publication of patent specification: **14.09.94**

(51) Int. Cl.⁵: **A01N 25/02**, B27K 3/50

(21) Application number: **89307047.4**

(22) Date of filing: **11.07.89**

(54) **Improvements in or relating to fungicides.**

(30) Priority: **15.07.88 NZ 225428**

(43) Date of publication of application:
**17.01.90 Bulletin 90/03**

(45) Publication of the grant of the patent:
**14.09.94 Bulletin 94/37**

(84) Designated Contracting States:
**AT BE CH DE ES FR GB GR IT LI LU NL SE**

(56) References cited:
**EP-A- 0 085 501**
**EP-A- 0 095 242**
**GB-A- 2 152 816**

(73) Proprietor: **CHEMICCA LIMITED**
**14 Mayo Road**
**Wiri Auckland (NZ)**

(72) Inventor: **Maynard, Nigel Paul**
**35 Renoir Street**
**West Harbour Auckland (NZ)**

(74) Representative: **Brown, John David et al**
**FORRESTER & BOEHMERT**
**Franz-Joseph-Strasse 38**
**D-80801 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to fungicides and is intended particularly to provide a prophylactic fungicidal composition and/or a method of preparing a prophylactic fungicidal composition, for treatment of lumber and/or for relatively long term protection of lumber.

Whilst alive and still growing trees suitable for conversion to lumber are generally relatively immune from or self protected from fungal attack. After felling or after damage to the protective barrier provided by the outer layer of bark, the tree (lumber) is immediately vulnerable to attack by a variety of fungal species.

It has been practice for many years to treat felled trees, peeled logs (including poles and posts) and sawn lumber with aqueous fluids containing fungicides as a means to control said fungal attack.

Current fungicidal formulations have many disadvantages including one or more of the following:

* High toxicity to users;
* Irritant effect on users;
* Strong offensive odour;
* Corrosive to skin and some metals;
* Instability at higher temperatures used in some processing operations;
* May not control all fungi of commercial importance expected in antisapstain operation;
* May require separate additives to maximise fungal control.

Antisapstain chemicals are formulated to provide treating fluids which are either suspensions, emulsions or true solutions of fungicides. Each has advantages in that emulsions and true solutions offer some penetration into wood whereas suspensions provide a more concentrated barrier on the wood surface.

It is an object of the invention to provide a fungicidal composition for treatment of lumber and/or a method of preparing a fundicidal composition for tretment of lumber, which will go at least some way towards overcoming the foregoing disadvantages or which will at least provide the public with a useful choice.

Accordingly, in one aspect, the invention consists in a method of preparing a fungicidal composition, characterised by the steps of:

(I) forming a suspension of a first fungicidal compound comprising: a substituted benzimidazole compound; a chemical precursor of a benzimidazole compound; a chemical precursor of a substituted benzimidazole compound; a substituted morpholinium compound; a substituted triazole compound; a substituted pyrimidine compound; a substituted imidazole compound; a substituted thiazole compound; a substituted pyridine compound; a substituted quinoxaline compound; a substituted triazine compound; a substituted guanidine compound; a substituted thiadiazole compound; Benomyl; diethyl 4,4'-(O-phenylene) bis (3-thioallophanate); 4-cyclododecyl-2,6-dimethyl morpholinium acetate; 4-n-butyl-4H-1,2,4-triazole; 5-n-butyl-2-dimethylamino-4-hydroxy-6-methyl pyrimidine; α-n-butyl-α-phenyl-1H-imidazole-1-propane-nitrile; 5-methyl-1,2,4-triazolo [3,4b]-benzothiazole; α,α-Bis(p-chlorophenyl)-3-pyridine methanol; 5,6,7,8-tetrachloroquinoxaline; 4,6-dichloro-N-(2-chlorophenyl)-1,3,5-triazin-2-amine; n-dodecylguanidine; 5-ethoxy-3-trichloromethyl-1,2,4-thiadiazole; Carbendazim; Thiabendazole; a Thiophanate compound or chemical equivalents thereof in a non-aqueous highly polar solvent system having at least one solvent of N-methyl pyrrolidone, cyclohexanone, isophorone, butyrolactone, 1,2 propylene carbonate, dioxane, tetrahydrofuran, 1,3 dimethyl 1,2-imidazolidone, tetra methyl urea, dimethyl formamide, dimethyl acetamide, dimethyl sulfoxide, dimethyl-2-pyrrolidone, n-ethyl pyrrolidone, n-methyl-2-piperidone or n-methyl caprolactam,

(II) adding a highly acidic organic acid to said suspension to achieve a solution by chemical reaction, and

(III) adding a surfactant system and a second fungicidal compound to said solution without any aqueous carrier to provide said concentrated fungicidal composition which when diluted with water for use results in said first fungicidal compound being principally present in the form of a micro-suspension and said second fungicidal compound being principally present in the form of micro-suspension or an emulsion.

In a further aspect the invention consists in a concentrated non-aqueous composition suitable for dilution with water prior to use characterised by:

(I) a salt, soap or complex formed by complexing a first fungicidal compound comprising a substituted benzimidazole compound; a chemical precursor of a benzimidazole compound; a chemical precursor of a substituted benzimidazole compound; a substituted morpholinium compound; a substituted triazole compound; a substituted pyrimidine compound; a substituted imidazole compound; a substituted thiazole compound; a substituted pyridine compound; a substituted quinoxaline compound; a substituted triazine compound; a substituted guanidine compound; a substituted thiadiazole compound; zinc or copper chelated with 8-hydroxyquinoline; Benomyl; diethyl 4,4'-(O-phenylene) bis (3-thioallophanate); 4-cyclododecyl-2,6-dimethyl morpholinium acetate; 4-n-butyl-4H-1,2,4-triazole; 5-n-butyl-2-dimethylamino-4-hydroxy-6-methyl pyrimidine; α-n-butyl-α-phenyl-1H-imidazole-1-propane-nitrile; 5-methyl-1,2,4-triazolo [3,4b]-benzothiazole; α,α-Bis(p-chlorophenyl)-3-pyridine methanol; 5,6,7,8-tetrachloroquinoxaline; 4,6-dichloro-N-(2-chlorophenyl)-1,3,5-triazin-2-amine; n-dodecylguanidine; 5-ethoxy-3-trichloromethyl-1,2,4-thiadiazole; Carbendazim; Thiabendazole; a Thiophanate compound or chemical equivalents thereof with a highly acidic organic acid;

(II) a second non-aqueous fungicidal compound;

(III) a non-aqueous highly polar solvent system having at least one primary solvent of N-methyl pyrrolidone, cyclohexanone, isophorone, butyrolactone, 1,2 propylene carbonate, dioxane, tetrahydrofuran, 1,3 dimethyl 1,2-imidazolidone, tetra methyl urea, dimethyl formamide, dimethyl acetamide, dimethyl sulphoxide, dimethyl-2-pyrrolidone, n-ethyl pyrrolidone, n-methyl-2-piperidone or n-methyl caprolactam;

(IV) a surfactant system; and

which when diluted with water for use results in said first fungicidal compound being principally present in the form of a micro-suspension and said second fungicidal compound being principally present in the form of micro-suspension or an emulsion.

The invention will now be more specifically described with reference to one presently preferred form of the invention.

The composition according to the invention is based preferably on substituted benzimidazole compounds as the primary fungicide, most preferably carbendazim (Methyl benzimidazol-2-ylcarbamate) but can be formulated using other substituted Benzimidazoles, such as Thiabendazole (2-(Thiazol-4-yl) benzimidazole), or chemical precursors of benzimidazoles, for example of carbendazim, including Benomyl (Methyl 1-(butylcarbamoyl) benzimidazol -2-ylcarbamate) and Thiophanate compounds for example Diethyl 4,4′-(0-phenylene) bis (3-thioallophanate).

The primary fungicide can also be selected from substituted morpholinium compounds, substituted triazole compounds, substituted pyrimidine compounds, substituted imidazole compounds, substituted thiazole compounds, substituted pyridine compounds, substituted quinoxaline compounds, substituted triazine compounds, substituted guanidine compounds, substituted thiadiazole compounds and zinc or copper chelated with 8-Hydroxyquinoline which has been further reacted with certain acids, including the organic acids specified hereinafter and also including Trifluoro acetic acid and Salicylic acid.

Examples of chemicals as listed as possible primary fungicides include:

1. 4-Cyclododecyl-2,6-dimethyl morpholinium acetate
2. 4-n-Butyl-4H-1,2,4-triazole
3. 5-n-Butyl-2-dimethylamino-4-hydroxy-6-methyl pyrimidine
4. α-n-Butyl-α-phenyl-1H-imidazole-1-propane-nitrile
5. 5-Methyl-1,2,4-triazolo [3,4b]-benzothiazole
6. α,α-Bis(p-chlorophenyl)-3-pyridine methanol.
7. 5,6,7,8-Tetrachloroquinoxaline
8. 4,6-Dichloro-N-(2-chloro phenyl)-1,3,5-triazin-2-amine
9. n-Dodecylguanidine
10. 5-Ethoxy-3-trichloromethyl-1,2,4-thiadiazole

During preparation the fungicide, preferably carbendazim, is reacted, in the solvent system described, with a suitable strong organic acid, preferably organic sulphonic acids or organic sulphuric acids including:

1) chemicals from the range of mono or di-substituted alkyl aryl sulphonic acids

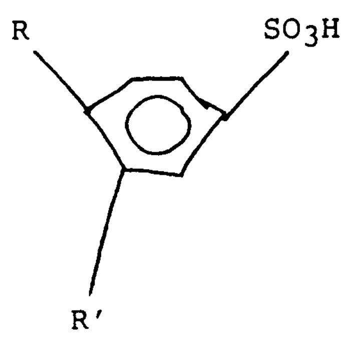

where R = hydrogen, halogen, hydroxy or straight chain or branched chain aliphatic $C_n H_{2n+1}$ where

n = 1 to 16
and R′ = hydrogen or straight chain or branched chain aliphatic $C_nH_{2n+1}$ where n = 1 to 16
2) Naphthalene sulphonic acids of the formula:

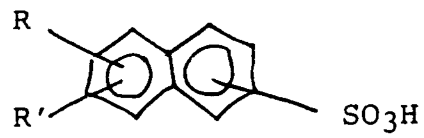

where R and R′ are defined as in 1) above
3) Aliphatic alcohol sulphuric acid half esters
4) Aliphatic and aromatic alcohol ether half esters
5) Alkane sulphonic acids
$C_n H_{2n+1} SO_3H$ where n = 13 to 18
6) Olefin sulphonic acids
Preferably said acid is Dodecyl benzene sulphonic acid.

The solvent system used is preferably based on low toxicity chemicals and should preferably be of low flammability whilst retaining very strong solvent properties. The solvent or solvents or mixtures thereof chosen should have solubility parameters according to the Hansen solubility parameter system of Polar bonding greater than 2.5 and Hydrogen bonding greater than 2. Whilst a variety of solvent systems can be used those preferably used with the above properties include N-methylpyrrolidone, Cyclohexanone, Isophorone, Butyrolactone or 1,2 propylene carbonate.

Other solvents which may be used include for example 1,3 Dimethyl-2-Imidazolidone, Tetra methyl urea, Dimethyl Formamide, Dimethyl Acetamide, Dimethyl Sulphoxide, Dimethyl-2-pyrrolidone, n-Ethyl Pyrrolidone, n-Methyl-2-Piperidone and n-Methyl Caprolactam.

The presently most preferred solvent N-methyl pyrrolidone is selected to give the highest solution concentration compatible with the other expressed requirements.

A cosolvent can also be used, for example when cost is a consideration, wherein the cosolvent can reduce the overall cost when the primary solvent can be expensive. The cosolvent can be selected from the group consisting of monomeric or polymeric glycols, alcohols, glycol ethers, alcohol esters, glycol esters and aromatic solvents. Although halogenated solvents can be used these are not preferred for environmental reasons.

The surfactant system can be selected from a range of chemicals including alkyl phenol ethoxylates, aliphatic alcohol ethoxylates, copolymers of ethylene oxide and propylene oxide, alcohol esters, poly alcohol poly esters, amine ethoxylates, ester ethoxylates, and phosphate esters.

The surfactant system should have a combined hydrotrope/lipotrope balance (HLB) between 7 and 15. The preferred surfactant in this application is nonyl phenol ethoxylate (9 E.O.).

Preferably the surfactant system should be single products or simple combinations thereof where the alkyl phenol ethoxylates are chosen for low cost.

After addition of the surfactant system a secondary fungicide is added. This is preferably of low toxicity and low cost. The preferred fungicide is based on a fungicidally active metal, preferably copper or zinc, which is incorporated as a metal soap of a suitable organic acid. The organic acid can include straight chain or branched chain aliphatic carboxylic acids, substituted aromatic carboxylic acids or the preferred naphthenic acids which are also fungicidally effective.

The preferred fungicide, zinc naphthenate, may be predissolved in a small amount of turpentine or similar solvent to reduce viscosity for ease of handling.

Further examples of suitable secondary fungicides include alkyl dimethyl amines, alkyl dimethyl benzyl ammonium compounds, alkyl dimethyl benzyl ammonium compounds with substituents on the benzene ring and dialkyl dimethyl ammonium compounds, in all of the above the alkyl group being preferably aliphatic with 10 to 16 carbon atoms, and can also include substituted thiazoles for example thiocyanato methyl thio benzothiazole.

These can be substituted or partially substituted for the preferred zinc or copper naphthenates described herein.

The compounds listed as primary fungicides can be also be used as secondary fungicides by selecting an alternative primary fungicide from those specified.

The amount of organic acid required to completely solubilize a particular fungicide will vary with the fungicide selected. Optionally, an insecticide may also be added to the composition. Suitable insecticides

include, for example, synthetic pyrethroids such as permethrin, and organochlorine insecticides such as lindane.

The preferred preparation of a composition according to the invention will now be described.

The N-methylpyrrolidone is added to the mix tank and agitated slowly. The carbendazim is added slowly and mixed until complete suspension occurs. The dodecyl benzene sulphonic acid is added slowly and mixed continued until the solution becomes clear.

The reaction between the preferred carbendazim and the preferred dodecyl benzene sulphonic acid occurs at ambient temperature. The reaction is exothermic, but not generally violently so. The temperature of reaction is economically slow at very low temperatures but no practical or economic advantage is gained from adding energy to the system other than to maintain a temperature of around 25°C. Where necessary cooling may be required to maintain moderate temperatures.

Upon completion of the reaction and cooling to ambient temperature when necessary, the surfactant system as described is added, followed by the zinc naphthenate secondary fungicide. Agitation is continued until the solution becomes uniform.

The following provides an example of the proportions of components included in a fungicidal composition according to the invention. This composition is provided by way of example only, and is not intended to be in anyway limited:

| | |
|---|---|
| Carbendazim | 7.5 parts by weight |
| Dodecyl benzene sulphonic acid | 26.0 parts by weight |
| N-methylpyrrolidone | 37.0 parts by weight |
| Nonyl phenol ethoxylate (9 E.O.) | 13.0 parts by weight |
| Alkyl dimethyl amine | 7.5 parts by weight |
| Zinc Naphthenate (8% Zn) | 9.0 parts by weight |
| TOTAL | 100.00 parts |

Thus it can be seen that according to at least the preferred form of the invention a fungicidal composition for treatment of lumber and/or a method of preparing such a composition is provided, which provides a treatment using fungicides of relatively low toxicity in a solvent system giving a true solution at high concentrations, which can be readily transported and handled. A further advantage is that the treating solution formed by dilution of this concentrated composition has the benefits of both a suspension and an emulsion, in that the active ingredients are carried in two distinct phases, one aqueous and one organic. This has the advantage of providing some penetration into the wood substance as well as providing a residual barrier on the wood surface.

The fungicides used are normally soluble only with difficulty in simple solvents and can form unstable products when in combination, but the composition provided by the present invention has advantages of low toxicity, low irritancy, good thermal stability, and provides a broader spectrum of protection than known fungicidal compositions without the need for further additives at treatment stage.

## Claims

**1.** A method of preparing a concentrated non-aqueous fungicidal composition suitable for dilution with water prior to use, comprising the ,steps of:

(I) forming a suspension of a first fungicidal compound comprising: a substituted benzimidazole compound; a substituted morpholinium compound; a substituted triazole compound; a substituted pyrimidine compound; a substituted imidazole compound; a substituted thiazole compound; a substituted pyridine compound; a substituted quinoxaline compound; a substituted thiazine compound; a substituted guanidine compound; a substituted thiadiazole compound; Benomyl; diethyl 4,4'-(O-phenylene) bis (3-thioallophanate); 4-cyclododecyl-2,6-dimethyl morpholinium acetate; 4-n-butyl-4H-1,2,4-triazole; 5-n-butyl-2-dimethylamino-4-hydroxy-6-methyl pyrimidine; α-n-butyl-α-phenyl-1H-imidazole-1-propane-nitrile; 5-methyl-1,2,4-triazolo [3,4b]-benzothiazole; α,α-Bis(p-chlorophenyl)-3-pyridine methanol; 5,6,7,8-tetrachloroquinoxaline; 4,6-dichloro-N-(2-chlorophenyl)-1,3,5-triazin-2-amine; n-dodecylguanidine; 5-ethoxy-3-trichloromethyl-1,2,4-thiadiazole; Carbendazim; Thiabendazole; a Thiophanate compound in a non-aqueous highly polar solvent system having at least one solvent of N-methyl pyrrolidone, cyclohexanone, isophorone, butyrolactone, 1,2 propylene carbonate, dioxane, tetrahydrofuran, 1,3 dimethyl 1,2-imidazolidone, tetra methyl urea, dimethyl formamide, dimethyl acetamide, dimethyl sulfoxide, dimethyl-2-pyrrolidone, n-ethyl pyrrolidone, n-methyl-2-piperidone or n-methyl caprolactam,
(II) adding a highly acidic organic acid to said suspension to achieve a solution by chemical reaction, and
(III) adding a surfactant system and a second fungicidal compound to said solution without any aqueous carrier to provide said concentrated fungicidal composition which when diluted with water for use results in said first fungicidal compound being principally present in the form of a micro-suspension and said second fungicidal compound being principally present in the form of a suspension or an emulsion.

**2.** A method as claimed in claim 1 wherein said organic acid is an organic sulphonic acid, organic sulphuric acid; trifluoro acetic acid or salicylic acid.

**3.** A method as claimed in claim 1 or claim 2 wherein said surfactant system comprises alkyl phenol ethoxylates, aliphatic alcohol ethoxylates, copolymers of ethylene oxide and propylene oxide, alcohol esters, polyalcohol polyesters, amine ethoxylates, ester ethoxylates or phosphate esters.

**4.** A method as claimed in any one of the preceding claims wherein said surfactant system has a combined hydrotrope/lipotrope balance (HLB) of between 7 and 15.

**5.** A method as claimed in any one of the preceding claims wherein said solvent system includes a co-solvent of monomeric or polymeric glycols, alcohols, glycol ethers, alcohol esters, glycol esters or aromatic solvents.

**6.** A method as claimed in any one of the preceding claims wherein said second fungicidal compound is a substituted benzimidazole, a substituted morpholinium compound, a substituted triazole compound, a substituted pyrimidine compound, a substituted imidazole compound, a substituted thiazole compound, a substituted pyridine compound, a substituted quinoxaline compound, a substituted triazine compound, a substituted guanidine compound, a substituted thiadiazole compound, zinc or copper chelated with 8-Hydroxyquinoline, an alkyl dimethyl amine, an alkyl dimethyl benzyl ammonium compound, an alkyl dimethyl benzyl ammonium compound having substituents on the benzene ring, a dialkyl dimethyl ammonium compound, or a substituted thiazole.

**7.** A method as claimed in any one of the preceding claims further comprising the step of adding to the fungicidal composition an insecticide of synthetic pyrethroids or organochlorine insecticides.

**8.** A method as claimed in claim 7 wherein said insecticide is permethrin or lindane.

**9.** A concentrated non-aqueous fungicidal composition suitable for dilution with water prior to use comprising:
(I) a reaction product formed by reacting a first fungicidal compound comprising a substituted benzimidazole compound; a substituted morpholinium compound; a substituted triazole compound; a substituted pyrimidine compound; a substituted imidazole compound; a substituted thiazole compound; a substituted pyridine compound; a substituted quinoxaline compound; a substituted triazine compound; a substituted guanidine compound; a substituted thiadiazole compound; zinc or copper chelated with 8-hydroxyquinoline; Benomyl; diethyl 4,4'-(O-phenylene) bis (3-thioallophanate); 4-cyclododecyl-2,6-dimethyl morpholinium acetate; 4-n-butyl-4H-1,2,4-triazole; 5-n-butyl-2-dimethylamino-4-hydroxy-6-methyl pyrimidine; $\alpha$-n-butyl-$\alpha$-phenyl-1H-imidazole-1-propane-nitrile; 5-methyl-1,2,4-triazolo [3,4b]-benzothiazole; $\alpha$,$\alpha$-Bis(p-chlorophenyl)-3-pyridine methanol; 5,6,7,8-tetrachloroquinoxaline; 4,6-dichloro-N-(2-chlorophenyl)-1,3,5-triazin-2-amine; n-dodecylguanidine; 5-ethoxy-3-trichloromethyl-1,2,4-thiadiazole; Carbendazim; Thiabendazole; a Thiophanate compound equivalents thereof with a highly acidic organic acid;
(II) a second non-aqueous fungicidal compound;
(III) a non-aqueous highly polar solvent system having at least one primary solvent of N-methyl pyrrolidone, cyclohexanone, isophorone, butyrolactone, 1,2 propylene carbonate, dioxane, tetrahydrofuran, 1,3 dimethyl 1,2-imidazolidone, tetra methyl urea, dimethyl formamide, dimethyl acetamide, dimethyl sulphoxide, dimethyl-2-pyrrolidone, n-ethyl pyrrolidone, n-methyl-2-piperidone or n-methyl caprolactam;

(IV) a surfactant system; and

which when diluted with water for use results in said first fungicidal compound being principally present in the form of a suspension and said second fungicidal compound being principally present in the form of a suspension or an emulsion.

**10.** A composition as claimed in claim 9 wherein said organic acid is an organic sulphonic acid; an organic sulphuric acid; trifluroacetic acid or salicylic acid.

**11.** A composition as claimed in claims 9 or 10 wherein said surfactant system is an alkyl phenol ethoxylate, an aliphatic alcohol ethoxylate, a copolymer of ethylene oxide and propylene oxide, an alcohol ester, a polyalcohol polyester, an amine ethoxylate, an ester ethoxylate or a phosphate ester.

**12.** A composition as claimed in any one of claims 9 to 11 wherein said surfactant system has a combined hydrotrope/lipotrope balance (HLB) of between 7 and 15.

**13.** A composition as claimed in any one of claims 9 to 12 wherein said solvent system includes a co-solvent of monomeric or polymeric glycols, alcohols, glycols, alcohols, glycol ethers, alcohol esters, glycol esters and aromatic solvents.

**14.** A composition as claimed in any one of claims 9 to 13 wherein said second fungicidal compound is a substituted benzimidazole, a substituted morpholinium compound, a substituted triazole compound, a substituted pyrimidine compound, a substituted imidazole compound, a substituted thiazole compound, a substituted pyridine compound, a substituted quinoxaline compound, a substituted triazine compound, a substituted guanidine compound, a substituted thiadiazole compound, zinc or copper chelated with 8-Hydroxyquinoline, an alkyl dimethyl amine, an alkyl dimethyl benzyl ammonium compound, an alkyl dimethyl benzyl ammonium compound having substituents on the benzene ring, a dialkyl dimethyl ammonium compound, a substituted thiazole, or zinc napthenate.

**15.** A composition as claimed in any one of claims 9 to 14 further comprising; an insecticide of synthetic pyrethroids or organochlorine insecticides.

**16.** A composition as claimed in claim 15 wherein said insecticie is permethrin or lindane.

**17.** A composition as claimed in any one of claims 9 to 15 diluted with water prior to use.

**18.** A method of preparing a fungicidal composition, comprising the steps of:-

(I) forming a suspension of a benzimidazole fungicidal compound in a solvent system of N-methylpyrrolidone, dimethyl formamide, dimethyl sulfoxide or 1,3 dimethyl 1,2-imidazolidone;

(II) adding a highly acidic organic sulphonic acid to said suspension to achieve a solution by chemical reaction and;

(III) adding a surfactant system and a second fungicidal compound

**19.** A method as claimed in claim 18 wherein said surfactant system has a combined hydrotrope/lipotrope balance (HLB) of between 7 and 15 and comprises a surfactant of alkyl phenol ethoxylates, aliphatic alcohol ethoxylates, copolymers of ethylene oxide and propylene oxide, alcohol esters, polyalcohol polyesters, amine ethoxylates, ester ethoxylates or phosphate esters.

**20.** A method as claimed in claim 18 or claim 19 wherein said solvent system includes a co-solvent of monomeric or polymeric glycols, alcohols, glycols, alcohols, glycol ethers, alcohol esters, glycol esters or aromatic solvents.

**21.** A method as claimed in any one of claims 18 to 20 wherein said second fungicidal compound is a substituted triazole compound, zinc or copper chelated with 8-Hydroxyquinoline, an alkyl dimethyl amine, an alkyl dimethyl benzyl ammonium compound or a dialkyl dimethyl ammonium compound.

**22.** A fungicidal composition comprising:-

(I) a reaction product formed between a benzimidazol fungicidal compound and a highly acidic organic sulphonic acid;

(II) a solvent of N-methylpyrrolidone, dimethyl formamide, dimethyl sulfoxide or 1,3 dimethyl 1,2-imidazolidone;
(III) a surfactant system; and
(IV) a second fungicidal compound.

**23.** A composition as claimed in claim 22 wherein said surfactant system has a combined hydrotrope/liptrope balance (HLB) of between 7 and 15 and comprises a surfactant of alkyl phenol ethoxylates, aliphatic alcohol ethoxylates, copolymers of ethylene oxide and propylene oxide, alcohol esters, polyalcohol polyesters, amine ethoxylates, ester ethoxylates, or phosphate esters.

**24.** A method of preparing a fungicidal composition comprising the steps of:-
(I) forming a suspension of methyl benzimidazol-2-ylcarbamate in N-methylpyrrolidone;
(II) adding dodecyl benzene sulphonic acid to said suspension to achieve a solution and;
(III) adding a surfactant and a second fungicidal compound.

**25.** A method as claimed in claim 24 wherein said second fungicidal compound comprises zinc napthenate.

**26.** A method as claimed in claim 24 wherein said surfactant comprises nonyl phenol ethoxylate.

## Patentansprüche

**1.** Ein Verfahren zur Herstellung einer konzentrierten nicht-wässrigen fungiziden Zusammensetzung, die zur Verdünnung mit Wasser vor dem Gebrauch geeignet ist, welches die Schritte umfaßt:
(I) Bilden einer Suspension einer ersten fungiziden Verbindung, umfassend: eine substituierte Benzimidazolverbindung; eine substituierte Morpholiniumverbindung; eine substituierte Triazolverbindung; eine substituierte Pyrimidinverbindung; eine substituierte Imidazolverbindung; eine substituierte Thiazolverbindung; eine substituierte Pyridinverbindung; eine substituierte Chinoxalinverbindung; eine substituierte Triazinverbindung; eine substituierte Guanidinverbindung; eine substituierte Thiadiazolverbindung; Benomyl; Diethyl-4,4'-(O-phenylen)-bis-(3-thioallophanat); 4-Cyclododecyl-2,6-dimethylmorpholiniumacetat; 4-n-Butyl-4H-1,2,4-triazol; 5-n-Butyl-2-dimethylamino-4-hydroxy-6-methylpyrimidin; $\alpha$-n-Butyl-$\alpha$-phenyl-1H-imidazol-1-propannitril; 5-Methyl-1,2,4-triazolo-[3,4b]-benzothiazol; $\alpha,\alpha$-Bis(p-chlorphenyl)-3-pyridinmethanol; 5,6,7,8-Tetrachlorchinoxalin; 4,6-Dichlor-N-(2-chlorphenyl)-1,3,5-triazin-2-amin; n-Dodecylguanidin; 5-Ethoxy-3-trichlormethyl-1,2,4-thiadiazol; Carbendazim; Thiabendazol; eine Thiophanatverbindung, in einem nicht-wässrigen stark polaren Lösungsmittelsystem mit wenigstens einem Lösungsmittel aus N-Methylpyrrolidon, Cyclohexanon, Isophoron, Butyrolacton, 1,2-Propylencarbonat, Dioxan, Tetrahydrofuran, 1,3-Dimethyl-1,2-imidazolidon, Tetramethylharnstoff, Dimethylformamid, Dimethylacetamid, Dimethylsulfoxid, Dimethyl-2-pyrrolidon, n-Ethylpyrrolidon, n-Methyl-2-piperidon oder n-Methylcaprolactam,
(II) Zugeben einer stark sauren organischen Säure zu besagter Suspension, um eine Lösung durch chemische Reaktion zu erreichen, und
(III) Zugeben eines Tensidsystems und einer zweiten fungiziden Verbindung zu besagter Lösung ohne irgendein wässriges Trägermittel, um besagte konzentrierte fungizide Zusammensetzung bereitzustellen, die, wenn vor Gebrauch verdünnt mit Wasser, dazu führt, daß besagte erste fungizide Verbindung hauptsächlich in der Form einer Mikrosuspension vorliegt und besagte zweite fungizide Verbindung hauptsächlich in der Form einer Suspension oder einer Emulsion vorliegt.

**2.** Ein Verfahren nach Anspruch 1, wobei besagte organische Säure eine organische Sulfonsäure, organische Schwefelsäure, Trifluoressigsäure oder Salicylsäure ist.

**3.** Ein Verfahren nach Anspruch 1 oder Anspruch 2, wobei besagtes Tensidsystem Alkylphenolethoxylate, aliphatische Alkoholethoxylate, Copolymere von Ethylenoxid und Propylenoxid, Alkoholester, Polyalkoholpolyester, Aminethoxylate, Esterethoxylate oder Phosphatester umfaßt.

**4.** Ein Verfahren nach einem der vorangehenden Ansprüche, wobei besagtes Tensidsystem ein kombiniertes Hydrotrop/Lipotrop-Gleichgewicht (HLB) von zwischen 7 und 15 besitzt.

**5.** Ein Verfahren nach einem der vorangehenden Ansprüche, wobei besagtes Lösungsmittelsystem ein Hilfslösungsmittel aus monomeren oder polymeren Glykolen, Alkoholen, Glykolethern, Alkoholestern,

Glykolestern oder aromatischen Lösungsmitteln einschließt.

6. Ein Verfahren nach einem der vorangehenden Ansprüche, wobei besagte fungizide Verbindung ein substituiertes Benzimidazol, eine substituierte Morpholiniumverbindung, eine substituierte Triazolverbindung, eine substituierte Pyrimidinverbindung, eine substituierte Imidazolverbindung, eine substituierte Thiazolverbindung, eine substituierte Pyridinverbindung, eine substituierte Chinoxalinverbindung, eine substituierte Triazinverbindung, eine substituierte Guanidinverbindung, eine substituierte Thiadiazolverbindung, Zink oder Kupfer, chelatisiert mit 8-Hydroxychinolin, ein Alkyldimethylamin, eine Alkyldimethylbenzylammoniumverbindung, eine Alkyldimethylbenzylammoniumverbindung mit Substituenten auf dem Benzolring, eine Dialkyldimethylammoniumverbindung oder ein substituiertes Thiazol ist.

7. Ein Verfahren nach einem der vorangehenden Ansprüche, das außerdem den Schritt umfaßt, daß der fungiziden Zusammensetzung ein Insektizid aus synthetischen Pyrethroiden oder Organochlor-Insektiziden zugegeben wird.

8. Ein Verfahren nach Anspruch 7, wobei besagtes Insektizid Permethrin oder Lindan ist.

9. Eine konzentrierte nicht-wässrige fungizide Zusammensetzung, die zur Verdünnung mit Wasser vor Gebrauch geeignet ist, umfassend:

(I) ein Reaktionsprodukt, das gebildet ist durch Umsetzen einer ersten fungiziden Verbindung, umfassend: eine substituierte Benzimidazolverbindung; eine substituierte Morpholiniumverbindung; eine substituierte Triazolverbindung; eine substituierte Pyrimidinverbindung; eine substituierte Imidazolverbindung; eine substituierte Thiazolverbindung; eine substituierte Pyridinverbindung; eine substituierte Chinoxalinverbindung; eine substituierte Triazinverbindung; eine substituierte Guanidinverbindung; eine substituierte Thiadiazolverbindung; Zink oder Kupfer, chelatisiert mit 8-Hydroxychinolin; Benomyl; Diethyl-4,4'-(O-phenylen)-bis-(3-thioallophanat); 4-Cyclododecyl-2,6-dimethylmorpholiniumacetat; 4-n-Butyl-4H-1,2,4-triazol; 5-n-Butyl-2-dimethylamino-4-hydroxy-6-methylpyrimidin; α-n-Butyl-α-phenyl-1H-imidazol-1-propannitril; 5-Methyl-1,2,4-triazolo-[3,4b]-benzothiazol; α,α-Bis(p-chlorphenyl)-3-pyridinmethanol; 5,6,7,8-Tetrachlorchinoxalin; 4,6-Dichlor-N-(2-chlorphenyl)-1,3,5-triazin-2-amin; n-Dodecylguanidin; 5-Ethoxy-3-trichlormethyl-1,2,4-thiadiazol; Carbendazim; Thiabendazol; eine Thiophanatverbindung oder Äquivalente derselben mit einer stark sauren organischen Säure;

(II) eine zweite nicht-wässrige fungizide Verbindung;

(III) ein nicht-wässriges stark polares Lösungsmittelsystem mit wenigstens einem primären Lösungsmittel aus N-Methylpyrrolidon, Cyclohexanon, Isophoron, Butyrolacton, 1,2-Propylencarbonat, Dioxan, Tetrahydrofuran, 1,3-Dimethyl-1,2-imidazolidon, Tetramethylharnstoff, Dimethylformamid, Dimethylacetamid, Dimethylsulfoxid, Dimethyl-2-pyrrolidon, n-Ethylpyrrolidon, n-Methyl-2-piperidon oder n-Methylcaprolactam;

(IV) ein Tensidsystem; und

die, wenn vor Gebrauch mit Wasser verdünnt, dazu führt, daß besagte erste fungizide Verbindung hauptsächlich in der Form einer Suspension vorliegt und besagte zweite fungizide Verbindung hauptsächlich in der Form einer Suspension oder einer Emulsion vorliegt.

10. Eine Zusammensetzung nach Anspruch 9, wobei besagte organische Säure eine organische Sulfonsäure; eine organische Schwefelsäure; Trifluoressigsäure oder Salicylsäure ist.

11. Eine Zusammensetzung nach den Ansprüchen 9 oder 10, wobei besagtes Tensidsystem ein Alkylphenolethoxylat, ein aliphatisches Alkoholethoxylat, ein Copolymer von Ethylenoxid und Propylenoxid, ein Alkoholester, ein Polyalkoholester, ein Aminethoxylat, ein Esterethoxylat oder ein Phosphatester ist.

12. Eine Zusammensetzung nach einem der Ansprüche 9 bis 11, wobei besagtes Tensidsystem ein kombiniertes Hydrotrop/Lipotrop-Gleichgewicht (HLB) von zwischen 7 und 15 besitzt.

13. Eine Zusammensetzung nach einem der Ansprüche 9 bis 12, wobei besagtes Lösungsmittelsystem ein Hilfslösungsmittel aus monomeren oder polymeren Glykolen, Alkoholen, Glykolen, Alkoholen, Glykolethern, Alkoholestern, Glykolestern und aromatischen Lösungsmitteln einschließt.

**14.** Eine Zusammensetzung nach einem der Ansprüche 9 bis 13, wobei besagte zweite fungizide Verbindung ein substituiertes Benzimidazol, eine substituierte Morpholiniumverbindung, eine substituierte Triazolverbindung, eine substituierte Pyrimidinverbindung, eine substituierte Imidazolverbindung, eine substituierte Thiazolverbindung, eine substituierte Pyridinverbindung, eine substituierte Chinoxalinverbindung, eine substituierte Triazinverbindung, eine substituierte Guanidinverbindung, eine substituierte Thiadiazolverbindung, Zink oder Kupfer, chelatisiert mit 8-Hydroxychinolin, ein Alkyldimethylamin, eine Alkyldimethylbenzylammoniumverbindung, eine Alkyldimethylbenzylammoniumverbindung mit Substituenten auf dem Benzolring, eine Dialkyldimethylammoniumverbindung, ein substituiertes Thiazol oder Zinknapthenat ist.

**15.** Eine Zusammensetzung nach einem der Ansprüche 9 bis 14, die außerdem ein Insektizid aus synthetischen Pyrethroiden oder Organochlor-Insektiziden umfaßt.

**16.** Eine Zusammensetzung nach Anspruch 15, wobei besagtes Insektizid Permitrin oder Lindan ist.

**17.** Eine Zusammensetzung nach einem der Ansprüche 9 bis 15, die vor Gebrauch mit Wasser verdünnt wird.

**18.** Ein Verfahren zur Herstellung einer fungiziden Zusammensetzung, welches die Schritte umfaßt:
(I) Bilden einer Suspension aus einer fungiziden Benzimidazolverbindung in einem Lösungsmittelsystem aus N-Methylpyrrolidon, Dimethylformamid, Dimethylsulfoxid, oder 1,3-Dimethyl-1,2-imidazolidon;
(II) Zugeben einer stark sauren organischen Sulfonsäure zu besagter Suspension, um eine Lösung durch chemische Reaktion zu erreichen; und
(III) Zugeben eines Tensidsystems und einer zweiten fungiziden Verbindung.

**19.** Ein Verfahren nach Anspruch 18, wobei besagtes Tensidsystem ein kombiniertes Hydrotrop/Lipotrop-Gleichgewicht (HLB) von zwischen 7 und 15 besitzt und ein Tensid aus Alkylphenolethoxylaten, aliphatischen Alkoholethoxylaten, Copolymeren von Ethylenoxid und Propylenoxid, Alkoholestern, Polyalkoholpolyestern, Aminethoxylaten, Esterethoxylaten oder Phosphatestern umfaßt.

**20.** Ein Verfahren nach Anspruch 18 oder Anspruch 19, wobei besagtes Lösungsmittelsystem ein Hilfslösungsmittel aus monomeren oder polymeren Glykolen, Alkoholen, Glykolen, Alkoholen, Glykolethern, Alkoholestern, Glykolestern oder aromatischen Lösungsmitteln einschließt.

**21.** Ein Verfahren nach einem der Ansprüche 18 bis 20, wobei besagte zweite fungizide Verbindung eine substituierte Triazolverbindung, Zink oder Kupfer, chelatisiert mit 8-Hydroxychinolin, ein Alkyldimethylamin, eine Alkyldimethylbenzylammoniumverbindung oder eine Dialkyldimethylammoniumverbindung ist.

**22.** Eine fungizide Zusammensetzung, umfassend:
(I) ein Reaktionsprodukt, das zwischen einer fungiziden Benzimidazolverbindung und einer stark sauren Sulfonsäure gebildet ist;
(II) ein Lösungsmittel aus N-Methylpyrrolidon, Dimethylformamid, Dimethylsulfoxid oder 1,3-Dimethyl-1,2-imidazolidon;
(III) ein Tensidsystem; und
(IV) eine zweite fungizide Verbindung.

**23.** Eine Zusammensetzung nach Anspruch 22, wobei besagtes Tensidsystem ein kombiniertes Hydrotrop/Lipotrop-Gleichgewicht (HLB) von zwischen 7 und 15 besitzt und ein Tensid aus Alkylphenolethoxylaten, aliphatischen Alkoholethoxylaten, Copolymeren von Ethylenoxid und Propylenoxid, Alkoholestern, Polyalkoholpolyestern, Aminethoxylaten, Esterethoxylaten oder Phosphatester umfaßt.

**24.** Ein Verfahren zur Herstellung einer fungiziden Zusammensetzung, das die Schritte umfaßt:
(I) Bilden einer Suspension aus Methylbenzimidazol-2-ylcarbamat in N-Methylpyrrolidon;
(II) Zugeben von Dodecylbenzolsulfonsäure zu besagter Suspension, um eine Lösung zu erreichen; und
(III) Zugeben eines Tensids und einer zweiten fungiziden Verbindung.

**25.** Ein Verfahren nach Anspruch 24, wobei besagte zweite fungizide Verbindung Zinknapthenat umfaßt.

**26.** Ein Verfahren nach Anspruch 24, wobei besagtes Tensid Nonylphenolethoxylat umfaßt.

## Revendications

**1.** Méthode pour la préparation d'une composition fongicide non aqueuse, concentrée, appropriée pour dilution par l'eau avant utilisation, comprenant les étapes suivantes :

(I) formation d'une suspension d'un premier composé fongicide comprenant les composés suivants : un composé de type benzimidazole substitué ; un composé de type morpholinium substitué; un composé de type triazole substitué; un composé de type pyrimidine substitué; un composé de type imidazole substitué; un composé de type thiazole substitué; un composé de type pyridine substitué; un composé de type quinoxaline substitué ; un composé de type triazine substitué ; un composé de type guanidine substitué ; un composé de type thiadiazole substitué ; le Benomyl; le diéthyl-4,4'-(O-phénylène)bis(3-thioallophanate) ; l'acétate de 4-cyclodécyl-2,6-diméthyl-morpholinium ; le 4-n-butyl-4H-1,2,4-triazole ; la 5-n-butyl-2-diméthylamino-4-hydroxy-6-méthylpyrimidine ; le α-n-butyl-α-phényl-1H-imidazole-1-propane-nitrile ; le 5-méthyl-1,2,4-triazolo[3,4b]-benzothiazole ; le α,α-bis(p-chlorophényl-3-pyridine-méthanol; la 5,6,7,8-tétrachloroquinoxaline ; la 4,6-dichloro-N-(2-chlorophényl)-1,3,5-triazine-2-amine ; la n-dodécyl-guanidine ; le 5-éthoxy-3-trichlorométhyl-1,2,4-thiadiazole ; le carbendazime ; le thiabendazole ; un composé de thiophanate dans un système solvant hautement polaire non aqueux, comprenant au moins un solvant pris dans le groupe comportant les N-méthyl-pyrrolidone, cyclohexanone, isophorone, butyrolactone, 1,2-propylène-carbonate, dioxane, tétrahydrofuranne, 1,3-diméthyl-1,2-imidazolidone, tétraméthylurée, diméthyl-formamide, diméthylacétamide, diméthyl-sulfoxyde, diméthyl-2-pyrrolidone, n-éthyl-pyrrolidone, n-méthyl-2-pipéridone ou n-méthyl-caprolactame,

(II) addition d'un acide organique fort à ladite suspension pour réaliser une solution par réaction chimique, et

(III) addition d'un système tensio-actif et d'un deuxième composé fongicide à ladite solution sans aucun agent véhicule aqueux pour mettre à disposition ladite composition fongicide concentrée qui, lorsqu'elle est diluée avec de l'eau en vue de l'utilisation, fait que ledit premier composé fongicide est essentiellement présent sous la forme d'une micro-suspension, et que ledit deuxième composé fongicide est essentiellement présent sous la forme d'une suspension ou émulsion.

**2.** Méthode selon la revendication 1, caractérisée en ce que l'acide organique est un acide sulfonique organique, acide sulfurique organique, acide trifluoroacétique ou acide salicylique.

**3.** Méthode selon la revendication 1 ou 2, caractérisée en ce que ledit système tensio-actif comprend des éthoxylates d'alkyl-phénols, éthoxylates d'alcools aliphatiques, copolymères de l'oxyde d'éthylène et de l'oxyde de propylène, des esters d'alcools, des polyesters de polyalcools, des éthoxylates-amines, des éthoxylates-esters, des phosphate-esters.

**4.** Méthode selon l'une quelconque des revendications précédentes, caractérisée en ce que le système tensio-actif a un rapport hydrotrope-lipotrope (HLB) combiné compris entre 7 et 15.

**5.** Méthode selon l'une quelconque des revendications précédentes, caractérisée en ce que ledit système solvant comprend un co-solvant de type glycols monomères ou polymères, alcools, éthers de glycols, esters d' alcools, esters de glycols ou solvants aromatiques.

**6.** Méthode selon l'une quelconque des revendications précédentes, caractérisée en ce que ledit deuxième composé fongicide est un des composés suivants : un composé de type benzimidazole substitué, un composé de type morpholinium substitué, un composé de type triazole substitué, un composé de type pyrimidine substitué, un composé de type imidazole substitué, un composé de type thiazole substitué, un composé de type pyridine substitué, un composé de type quinoxaline substitué, un compose de type triazine substitué, un composé de type guanidine substitué, un composé de type thiadiazole substitué, le zinc ou le cuivre chélaté avec la 8-hydroxyquinoléine, une alkyl-diméthylamine, un composé d'alkyl-diméthylbenzyl-ammonium, un composé d'alkyl-diméthyl-benzyl-ammonium ayant des substituants sur le cycle de benzène, un composé de dialkyl-diméthyl-ammonium ou un thiazole substitué.

**7.** Méthode selon l'une quelconque des revendications précédentes, comprenant de plus l'étape d'addition à la composition fongicide d'un insecticide à base de pyréthroïdes synthétiques ou d'insecticides organochlorés.

**8.** Méthode selon la revendication 7, caractérisée en ce que ledit insecticide est la permethrine ou le lindane.

**9.** Composition fongicide non aqueuse, concentrée, appropriée pour dilution avec de l'eau avant utilisation, comprenant :

(I) un produit de réaction formé par réaction d'un premier composé fongicide comprenant les composés suivants : un composé de type benzimidazole substitué ; un composé de type morpholinium substitué; un composé de type triazole substitué; un composé de type pyrimidine substitué; un composé de type imidazole substitué; un composé de type thiazole substitué; un composé de type pyridine substitué; un composé de type quinoxaline substitué; un composé de type triazine substitué ; un composé de type guanidine substitué ; un composé de type thiadiazole substitué ; le zinc ou le cuivre chélaté avec la 8-hydroxyquinoléine ; le Benomyl; le diéthyl-4,4'-(O-phénylène)bis(3-thioallophanate) ; l'acétate de 4-cyclododécyl-2,6-diméthyl-morpholinium ; le 4-n-butyl-4H-1,2,4-triazole ; le 5-n-butyl-2-diméthylamino-4-hydroxy-6-méthyl-pyrimidine ; le α-n-butyl-α-phényl-1H-imidazole-1-propane-nitrile ; le 5-méthyl-1,2,4-triazolo[3,4b]-benzothiazole ; le α,α-bis(p-chlorophényl)-3-pyrimidine-méthanol; la 5,6,7,8-tétrachloro-quinoxaline ; la 4,6-dichloro-N-(2-chlorophényl)-1,3,5-triazine-2-amine ; la n-dodécylguanidine ; le 5-éthoxy-3-trichlorométhyl-1,2,4-thiadiazole ; le carbendazime ; le thiabendazole ; des équivalents d'un composé de thiophanate avec un acide organique fort ;

(II) un deuxième composé fongicide non aqueux ;

(III) un système solvant non aqueux, hautement polaire, comprenant au moins un solvant primaire pris dans le groupe des N-méthyl-pyrrolidone, cyclohexanone, isophorone, butyrolactone, 1,2-propylène-carbonate, dioxane, tétrahydrofuranne, 1,3-diméthyl-1,2-imidazolidone, tétraméthylurée, diméthyl-formamide, diméthylacétamide, diméthyl-sulfoxyde, diméthyl-2-pyrrolidone, n-éthyl-pyrrolidone, n-méthyl-2-pipéridone ou n-méthyl-caprolactame,

(IV) un système tensio-actif ; et

qui, lorsqu'elle est diluée avec de l'eau en vue de l'utilisation, fait que ledit premier composé fongicide est essentiellement présent sous la forme d'une suspension et que ledit deuxième composé fongicide est essentiellement présent sous la forme d'une suspension ou émulsion.

**10.** Composition selon la revendication 9, caractérisée en ce que ledit acide organique est un acide sulfonique organique; un acide sulfurique organique; l'acide trifluoroacétique ou l'acide salicylique.

**11.** Composition selon la revendication 9 ou 10, caractérisée en ce que ledit système tensio-actif est un éthoxylate d'alkyl-phénols, un éthoxylate d'alcools aliphatiques, un copolymère de l'oxyde d'éthylène et de l'oxyde de propylène, un ester d'alcool, un polyester de polyalcools, un éthoxylate-amine, un éthoxylate-ester ou un phosphate-ester.

**12.** Composition selon l'une des revendication 9 à 11, caractérisée en ce que le système tensio-actif a un rapport hydrotrope-lipotrope (HLB) combiné compris entre 7 et 15.

**13.** Composition selon l'une quelconque des revendication 9 à 12, caractérisée en ce que ledit système solvant comprend un co-solvant de type glycols monomère ou polymère, alcools, glycols, alcools, éthers de glycols, esters d'alcools, esters de glycols et solvants aromatiques.

**14.** Composition selon l'une quelconque des revendications 9 à 13, caractérisée en ce que ledit deuxième composé fongicide est un des composés suivants : un composé de type benzimidazole substituée, un composé de type morpholinium substitué, un composé de type triazole substitué, un composé de type pyrimidine substituée, un composé de type imidazole substitué, un composé de type thiazole substitué, un composé de type pyridine substituée, un composé de type quinoxaline substituée, un composé de type triazine substituée, un composé de type guanidine substituée, un composé de type thiazole substituée, le zinc ou le cuivre chélaté avec la 8-hydroxyquinoléine, une alkyl-diméthylamine, un composé d'alkyl-diméthyl-benzyl-ammonium, un composé d'alkyl-diméthyl-benzyl-ammonium ayant des substituants sur le cycle de benzène, un composé de dialkyl-diméthyl ammonium, un thiazole substitué ou le naphténate de zinc.

**15.** Composition selon l'une quelconque des revendications 9 à 14, comprenant de plus un insecticide à base de pyréthroïdes synthétiques ou d'insecticides organochlorés.

**16.** Composition selon la revendication 15, caractérisée en ce que ledit insecticide est la permethrine ou le lindane.

**17.** Composition selon l'une quelconque des revendications 9 à 15, diluée avec de l'eau avant utilisation.

**18.** Méthode pour la préparation d'une composition fongicide comprenant les étapes suivantes :
(I) formation d'une suspension d'un composé fongicide de type benzimidazole dans un système solvant pris dans le groupe des N-méthyl-pyrrolidone, diméthyl-formamide, diméthylsulfoxyde ou 1,3-diméthyl-1,2-imidazolidone ;
(II) addition d'un acide organique sulfonique fort à ladite suspension pour réaliser une solution par réaction chimique, et
(III) addition d'un système tensio-actif et d'un deuxième composé fongicide.

**19.** Méthode selon la revendication 18, caractérisée en ce que ledit système tensio-actif a un rapport hydrotrope-lipopotrope (HLB) combiné compris entre 7 et 15 et comprend un agent tensio-actif d'éthoxylate d'alkylphénol, d'éthoxylate d'alcools aliphatiques, de copolymères de l'oxyde d'éthylène et de l'oxyde de propylène, esters d'alcools, polyesters de polyalcools, éthoxylates-amines, éthoxylates-esters et phosphate-esters.

**20.** Méthode selon la revendication 18 ou la revendication 19, caractérisée en ce que ledit système solvant comprend un co-solvant de type glycols monomères ou polymères, alcools, glycols, alcools, éthers de glycols, esters d'alcools, esters de glycols ou solvants aromatiques.

**21.** Méthode selon l'une quelconque des revendications 18 à 20, caractérisée en ce que ledit deuxième composé fongicide est un composé de type triazole substitué, le zinc ou le cuivre chélaté avec la 8-hydroxyquinoléine, une dialkyl-dimétylamine, un composé d'alkyl-diméthyl-benzylammonium ou un composé de dialkyldiméthylammonium.

**22.** Composition fongicide comprenant :
(I) le produit de réaction formé à partir d'un composé fongicide de type benzimidazole et d'un acide sulfonique organique fort ;
(II) un solvant pris dans le groupe des N-méthylpyrrolidone, diméthylformamide, diméthylsulfoxyde ou 1,3-diméthyl-1,2-imidazoline ;
(III) un système tensio-actif ; et
(IV) un deuxième composé fongicide.

**23.** Composition selon la revendication 22, caractérisée en ce que ledit système tensio-actif a un rapport combiné hydrotrope/lipotrope (HBL) compris entre 7 et 15 et comprend un agent tensio-actif de type éthoxylates d'alkyl-phénol, éthoxylates d'alcools aliphatiques, copolymères de l'oxyde d'éthylène et de l'oxyde de propylène, esters d'alcools, polysters de polyalcools, éthoxylates-amine, éthoxylates-esters ou phosphate-esters.

**24.** Méthode pour la préparation d'une composition fongicide comprenant les étapes de :
(I) formation d'une suspension de méthyl-benzimidazol-2-ylcarbamate dans le N-méthyl-pyrrolidone, et ;
(II) addition d'un acide dodécyl-benzènesulfonique à ladite suspension pour réaliser une solution et;
(III) addition d'un agent tensio-actif et un deuxième composé fongicide.

**25.** Méthode selon la revendication 24, caractérisée en ce que le deuxième composé fongicide comprend le naphténate de zinc.

**26.** Méthode selon la revendication 24, caractérisée en ce que ledit agent tensio-actif comprend l'éthoxylate de nonyl-phénol.